# DEMANDE DE BREVET EUROPEEN

(11) **EP 3 797 864 A1**
(43) Date de publication de la demande: **31.03.2021**
(21) Numéro de dépôt: 19200532.0
(22) Date de dépôt: 30.09.2019
(51) Int. Cl.: B01J 21/06, B01J 23/06, B01J 23/72, B01J 23/745, B01J 23/755, B01J 35/00, B01J 37/00, B01J 37/03, C01G 23/053

(54) **SUPPORT ACTIF EN PHOTOCATALYSE**

(71) Demandeur: Centre National de la Recherche Scientifique, 75016 Paris (FR); Université Cergy-Pontoise, 95000 Cergy (FR); Commissariat à l'énergie atomique et aux énergies alternatives, 75015 Paris (FR)
(72) Inventeur: PASTERNAK, Nicolas, Avernes 95450 (FR); LINDER, Nancy, 95450 Neuville sur Oise (FR)
(74) Mandataire: Demulsant, Xavier

(57) **Abrégé**

La présente invention concerne un procédé de réalisation d'un support de taille au moins micrométrique et actif en photocatalyse au moins dans le domaine du visible, contenant des cristaux composés chacun de 80 à 100 % en moles de TiO₂ et de 0 à 20% en moles d'au moins un autre oxyde métallique ou semi-métallique, comprenant les étapes suivantes, à partir d'un milieu réactionnel aqueux acide, à une température de chauffage comprise entre 20 et 60°C: une étape d'ajout du précurseur d'oxyde de titane, ou d'un mélange du précurseur d'oxyde de titane et du précurseur de l'autre oxyde, dans le milieu réactionnel aqueux acide, et une étape de polymérisation sur ou à l'intérieur du support, par pulvérisation sur le support ou immersion du support dans le milieu réactionnel aqueux, pendant une durée déterminée de polymérisation, une étape de chauffage, le support permettant de faire cristalliser les cristaux, sans utilisation de tensioactif, dans le milieu réactionnel aqueux, une étape de rinçage à l'eau et une étape de récupération d'une part du support sur lequel la cristallisation a eu lieu, ces cristaux étant accrochés par liaisons covalentes au support, et d'autre part d'une solution résiduelle.

## Description

### DOMAINE DE L'INVENTION

La présente invention concerne un procédé pour réaliser des cristaux composés chacun de 80 à 100 % en moles de TiO₂ et de 0 à 20% en moles d'au moins un autre oxyde métallique ou semi-métallique.

### ETAT DE LA TECHNIQUE

Les nanoparticules à base de TiO₂ sont utilisées dans de nombreux domaines : cosmétique (crème solaire), alimentaire, dépollution, etc. Il s'agit de matériaux bon marché, d'où un emploi très courant. Depuis quelques années, quelques études alertent contre les dangers d'une utilisation de ces matériaux nanométriques (taille < 100nm).

Du fait de leur taille nanométrique, ces matériaux passeraient à travers les barrières de protection des êtres vivants, s'accumuleraient dans les organismes en affectant hypothétiquement les cellules. Les conséquences sur ces cellules sont très discutées actuellement : certaines études relatent un impact très néfaste allant même jusqu'à la destruction cellulaire, d'autres au contraire ont montré des conséquences très faibles à modérées.

Les revêtements autonettoyants ou réflectifs (textiles, peintures, verres, bétons...) à base de TiO₂ sont connus, le problème majeur restant la taille nanométrique des particules d'oxyde de titane jugée dangereuse pour les êtres vivants. Dans les procédés existants, ces nanocristaux d'oxyde de titane, une fois synthétisés ou achetés, sont importés à l'intérieur ou sur la surface des revêtements. Le risque de dissémination dans l'environnement est donc réel, puisque ces particules peuvent se décrocher aisément, de par le lien très faible entre revêtement et matériaux.

Outre la petite taille de ces matériaux, c'est aussi leur caractère pulvérulent entraînant une dissémination forte dans l'environnement qui pose souci. D'autant plus qu'il est impossible pour le moment, au vu de leurs propriétés exceptionnelles et de leur faible coût de production, d'éliminer ces matériaux des procédés existants. C'est pourquoi il est important de pouvoir annihiler cette toxicité, sans diminuer significativement les propriétés des matériaux ni augmenter leur coût de formulation, et de développer de nouveaux procédés plus respectueux de l'environnement.

C'est dans ce contexte que se place l'invention.

### EXPOSE DE L'INVENTION

Les inventeurs ont mis au point une méthode permettant de fixer le TiO₂ in situ à l'intérieur ou sur la surface d'un support, permettant le développement de nouveaux procédés et la transformation d'un TiO₂ dans une forme non pulvérulente et non nanométrique gardant des propriétés photocatalytiques exceptionnelles.

L'objet de l'invention permet ainsi de rendre des supports actifs en photocatalyse en incorporant des matériaux à base d'oxyde de titane dans des conditions douces (respectant les critères de la chimie verte).

Cette méthode innovante a deux avantages.

Premièrement, rendre des supports actifs en photocatalyse. Ces supports peuvent être de natures très diverses (polymères, feutres de carbone/graphite ou charbon actif, verres, textiles, silicates, etc...), permettant de nombreuses applications telles que les revêtements autonettoyants, les filtres à air antibactériens, les peintures réflectives, etc.

Deuxièmement, fixer les nanocristaux à base d'oxyde de titane sur une surface sans perte de réactivité, empêchant ainsi tout risque de dissémination dans l'environnement.

Ainsi, la présente invention permet de réaliser un lien entre support et TiO₂ très fort en développant directement les cristaux à l'intérieur ou sur la surface d'un support, sans risque de se décrocher et se disséminer dans l'environnement.

Pour certaines applications ne permettant pas une synthèse in situ, comme les peintures par exemple, les cristaux sont développés sur des supports micrométriques et macrométriques, puis ajoutés au procédé sans perte de réactivité.

Il est aussi possible d'asperger le milieu réactionnel TiO₂ sur la peinture.

Parmi les applications exposées plus haut, nous avons réussi à développer des textiles réactifs (textile à base de basalte, feutres de carbone et aussi un tissu contenant 65% de polyester et 35% de coton) notamment pour éliminer, en solution aqueuse, des colorants et pour certains d'entre eux du toluène (COV trouvé dans l'air intérieur des bâtiments), de l'acide benzoïque, et un composé très problématique ces dernières années : le glyphosate. Nous avons aussi développé du polystyrène réactif pour éliminer un colorant dans l'eau. Nous avons aussi la preuve que nos matériaux restent actifs malgré leur cristallisation sur des composés silicés millimétrique, et aussi des matériaux de construction comme le sable (micrométrique), laissant suggérer que notre technologie peut être utilisée dans le BTP.

La palette d'application est très large, puisque la cristallisation des matériaux à base de TiO₂ peut se faire sur de très nombreux supports.

De plus, grâce à la présente invention, l'oxyde de TiO₂ peut être mis à l'échelle micrométrique ou millimétrique, sans perte de réactivité, permettant de résoudre les problèmes liés à sa taille nanométrique dans de nombreuses autres applications.

### DESCRIPTION DES FIGURES

La présente étude a été réalisée avec un matériau à base de TiO₂ (composé de 80 à 100 % en moles de TiO₂ et de 0 à 20 % en moles d'un autre oxyde) sur tissu textile à base de basalte, sur carbone feutré, sur des polymères comme le polystyrène, sur un support coton/polyester (blouse chimiste), sur des supports silicés de taille variable macrométriques et micrométriques (silice de filtration et sable).

Les polluants organiques utilisés sont : méthylorange (concentration 10mg/L (ou ppm)) et bleu de bromophénol (concentration 20mg/L (ou ppm)), glyphosate et toluène (concentration 1mg/L (ou ppm)); et ils ont été soumis à 3 heures de rayonnement.

La présente étude montre qu'avec le TiO₂ de la présente invention, la photocatalyse est possible avec un rayonnement dans le domaine du visible (qui apporte peu d'énergie pour la réaliser) et est plus importante qu'avec un TiO₂ commercial seul moins actif. La plupart des études montre que les TiO₂ de l'état de l'art permettent surtout une photocatalyse avec un rayonnement UV, qui apporte plus d'énergie pour la réaliser que le rayonnement dans le domaine du visible.

Les caractéristiques et avantages de l'invention sortiront de la description détaillée qui suit en référence aux dessins donnés à titre illustratif et non limitatif parmi lesquels :

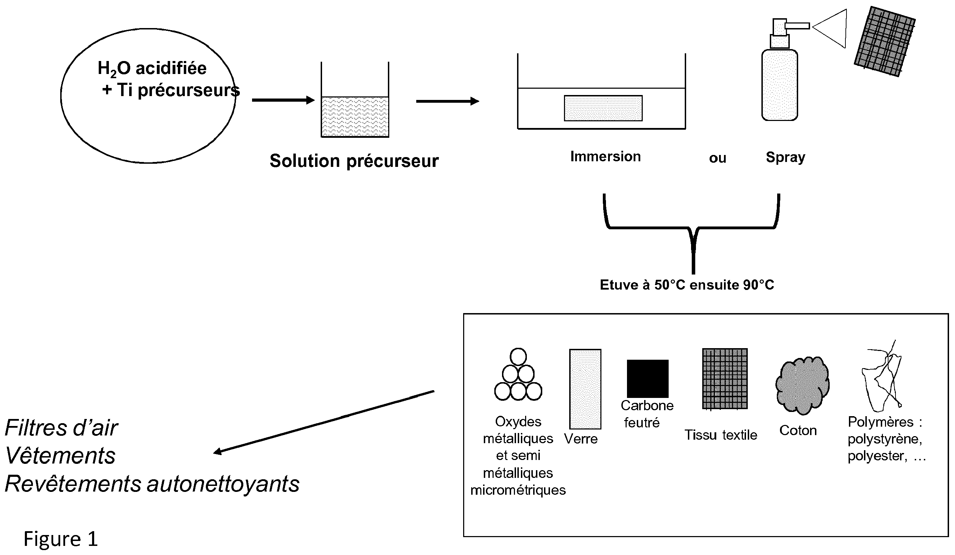

- la figure 1 représente un schéma d'application des matériaux à base de TiO₂ sur support ;

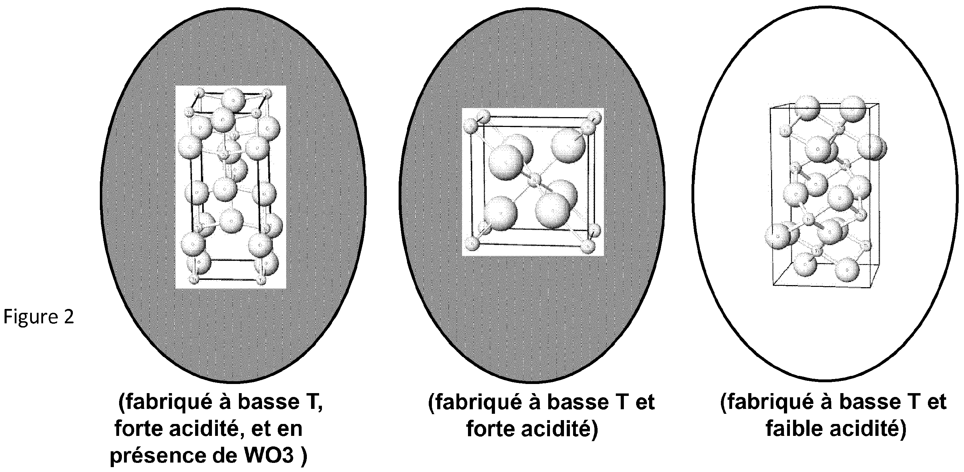

- la figure 2 représente les trois structures cristallines à base de TiO₂ obtenues grâce à l'invention ;

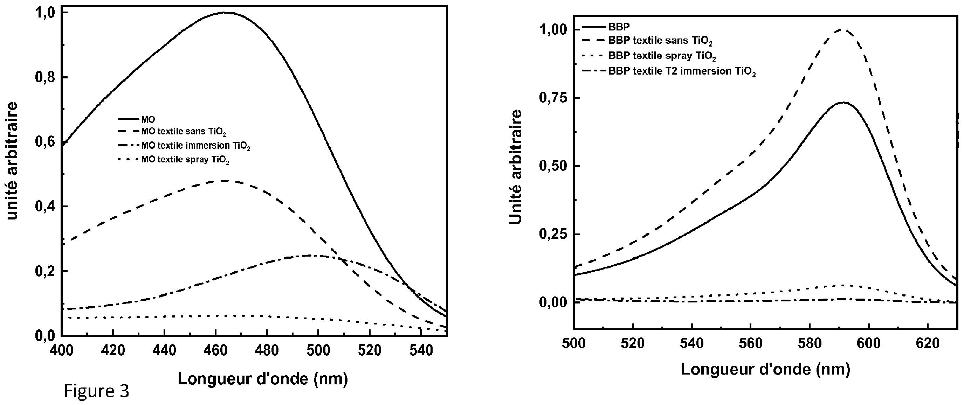

- la figure 3 représente un graphique illustrant la dégradation des colorants sur tissu textile à base de basalte ; la figure 3 montre l'adsorption des molécules de colorant sur le textile sans traitement mais une plus grande efficacité en présence des cristaux ; les cristaux sont bien accrochés dans les fibres, et il n'y a pas de TiO₂ dans la solution ;

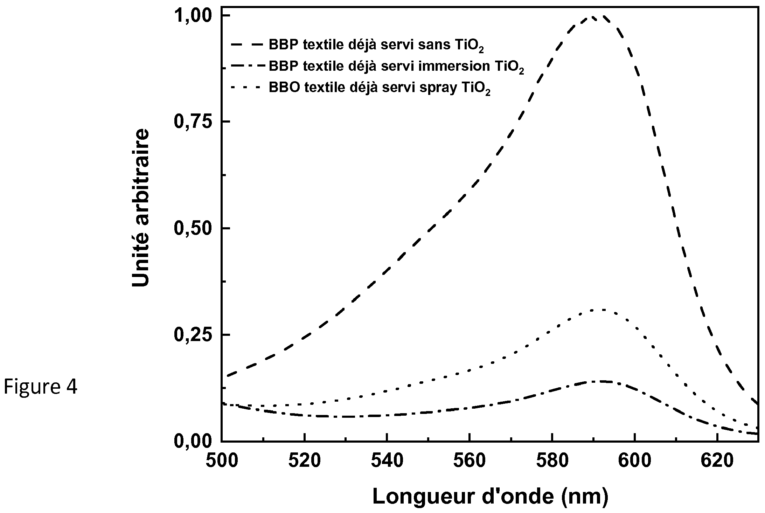

- la figure 4 représente un graphique illustrant la dégradation du bleu de bromophénol concentré sur tissu textile à base de basalte déjà servi (recyclage) ; la figure 4 montre que la réutilisation des textiles est possible sans perte d'activité, ainsi que la longue durée de vie des textiles ;

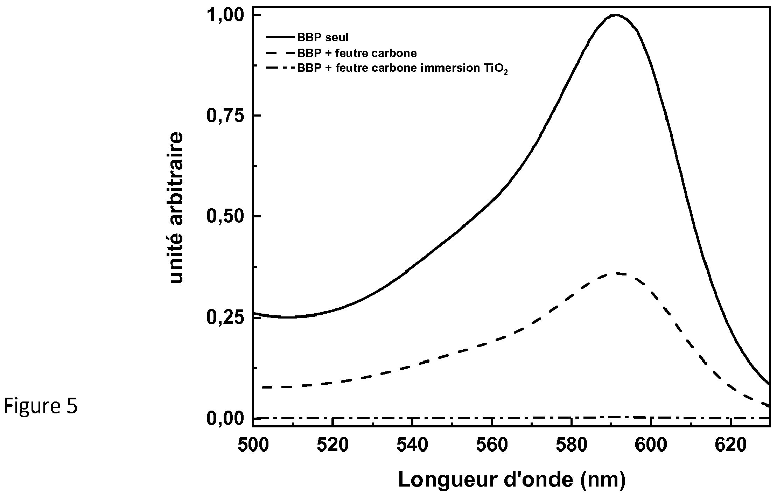

- la figure 5 représente un graphique illustrant la dégradation du bleu de bromophénol BBP sur feutre carbone ; la figure 5 montre l'adsorption des molécules de BBP sur le feutre carboné mais en présence de TiO₂ encore plus de réactivité (disparition totale des molécules organiques en solution) ; les cristaux sont bien accrochés dans le feutre, et il n'y a pas de TiO₂ dans la solution ;

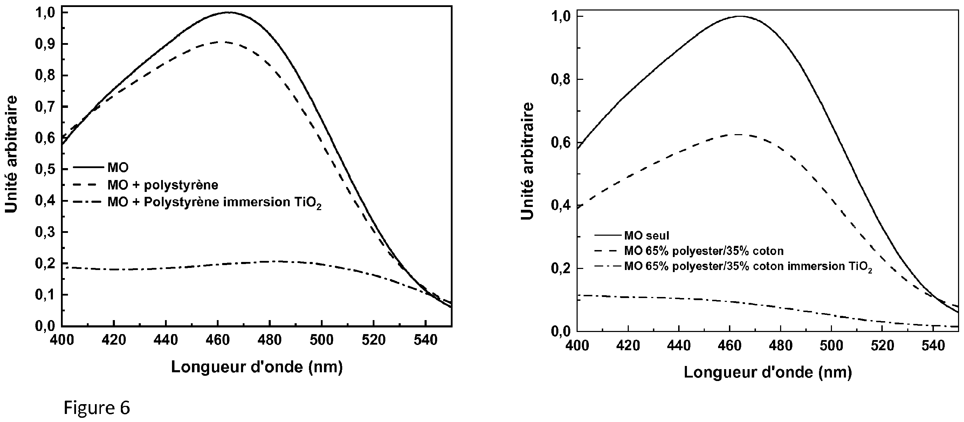

- la figure 6 représente un graphique illustrant la dégradation du méthylorange sur du polystyrène et sur un mélange de polyester/coton (65%/35%) ; la figure 6 montre un polystyrène et mélange polyester/coton rendus réactifs avec l'ajout de TiO₂ ; les cristaux sont bien accrochés sur ces deux supports, et il n'y a pas de TiO₂ dans la solution ;

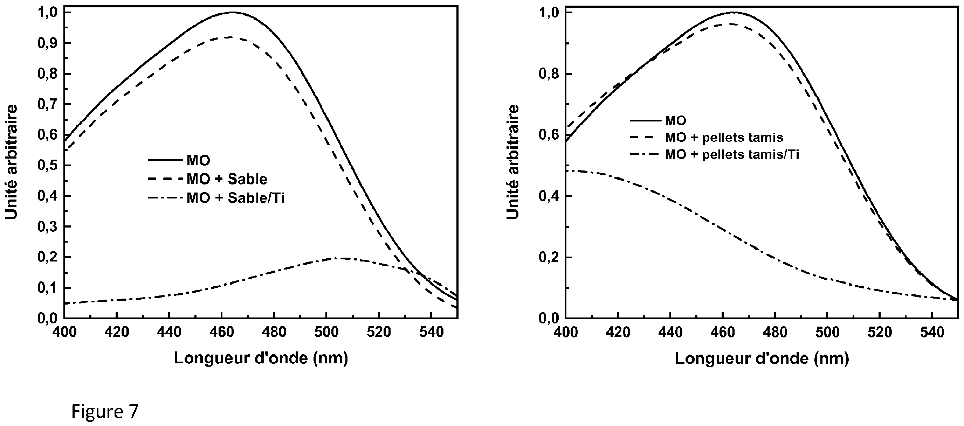

- la figure 7 représente un graphique illustrant la dégradation du méthylorange sur du sable de Fontainebleau et des pellets de tamis (mélange d'Al₂O₃ et Fe₂O₃); le sable et granulés sont rendus réactifs avec l'ajout de TiO₂; TiO₂ s'adhère à des supports à base de SiO₂ mais contenant aussi Al₂O₃, Fe₂O₃, à l'échelle micrométrique ; les cristaux sont bien accrochés dans sur ces deux supports, et il n'y a pas de TiO₂ dans la solution ;

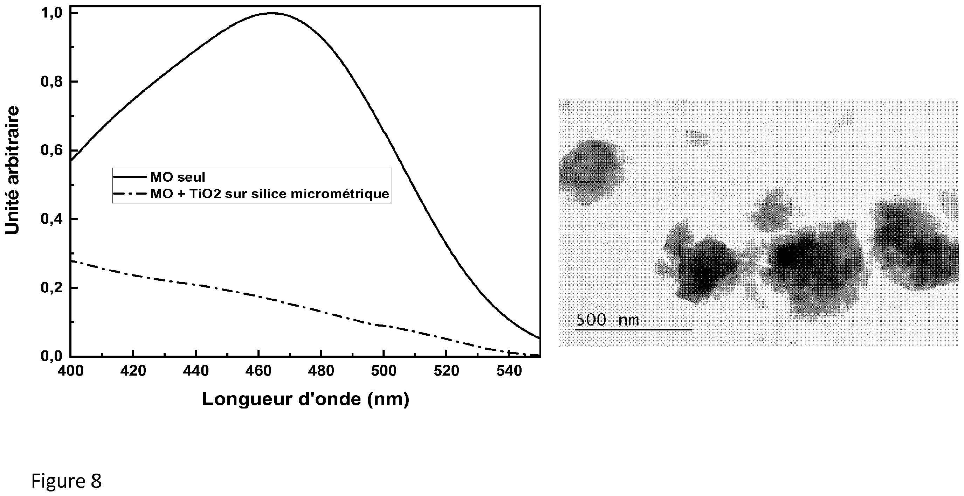

- la figure 8 représente un graphique illustrant la dégradation du méthylorange sur de la silice de filtration (micrométrique) ; la silice micrométrique est rendue réactive avec l'ajout de TiO₂; TiO₂ adhère à des supports à base de SiO₂ à l'échelle micrométrique ; la silice a été traitée avec greffage de Cull avant traitement avec TiO2 pour améliorer la quantité de groupements silanols sur la surface, la réaction intervenant sans augmentation des groupements silanols ;

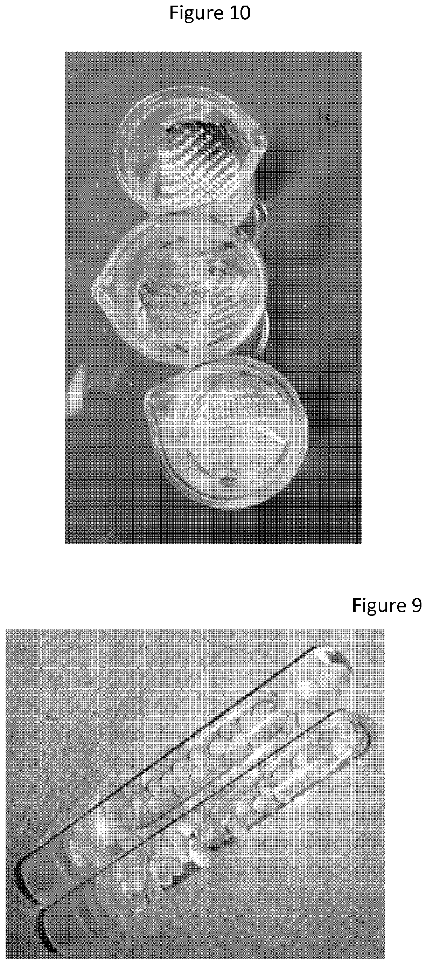

- la figure 9 représente des billes de polystyrène seules avec Méthylorange (à gauche) à t=0, et des billes de polystyrène/Ti avec Méthylorange après rayonnement ;
- la figure 10 représente des photos prises après rayonnement et séchage du textile : textile sans Ti avec bleu de bromophénol (en haut), textile/Ti immersion avec bleu de bromophénol (au milieu), textile/Ti par spray avec bleu de bromophénol (en bas) ;

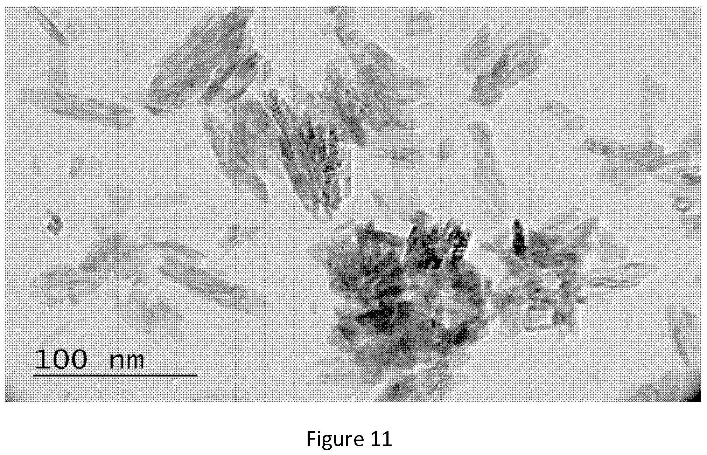

- la figure 11 représente une image en microscopie électronique à transmission - Charbon actif/Ti.

### DESCRIPTION DETAILLEE DE L'INVENTION

La présente invention concerne un procédé de préparation d'un milieu réactionnel aqueux composé de 80 à 100 % en moles de TiO₂ et de 0 à 20 % en moles d'un autre oxyde, à partir du précurseur d'oxyde de titane qui est un alcoxyde de titane, ou du mélange de ce précurseur d'oxyde de titane avec au moins un autre précurseur d'un autre oxyde métallique ou semi-métallique.

Dans une alternative non décrite ici, le précurseur d'oxyde de titane pourrait être choisi parmi le TiCl₄, Na₂Ti₃O₇ ou un dérivé.

La préparation est effectuée en milieu aqueux acide à un pH donné, sans utilisation de tensioactif, et comprend les sous-étapes suivantes :
a1) préparation et chauffage d'une solution aqueuse acide à un pH donné compris entre 0 et 6, et à une température comprise entre 20 et 60°C, sans tensioactif, par ajout d'un acide chlorhydrique,
a2) ajout du précurseur d'oxyde de titane, ou du mélange du précurseur d'oxyde de titane et d'au moins un autre précurseur d'un autre oxyde à la solution aqueuse acide, un précipité se formant alors,
a3) agitation forte du milieu réactionnel aqueux, de façon à dissoudre le précipité formé à l'étape a2).

Avantageusement, on ajoute de l'acide chlorhydrique, par exemple entre 30 à 37% en masse/volume.

Dans une première réalisation du procédé, dans l'étape a1), le pH du milieu réactionnel est choisi autour de 5, de façon à obtenir des cristaux sur le support ayant une forme cristalline Brookite stable, et réactifs en photocatalyse au moins dans le domaine visible.

Dans une deuxième réalisation du procédé, dans l'étape a1), le pH du milieu réactionnel est choisi autour de 0-1, de façon à obtenir des cristaux ayant une forme cristalline Rutile, réactifs en photocatalyse au moins dans le domaine visible.

L'oxyde métallique ou semi-métallique peut être choisi parmi : SiO₂, ZrO₂, Al₂O₃, Fe₂O₃, CeO₂, MgO, ZnO, CuO, NiO.

Dans une troisième réalisation du procédé, l'autre oxyde métallique étant WO₃, et dans l'étape a1) le pH du milieu réactionnel est situé entre 0 et 5, de façon à obtenir des cristaux ayant une forme cristalline Anatase à au moins 90%, réactifs en photocatalyse au moins dans le visible.

La présente invention concerne aussi un procédé de réalisation d'un support de taille au moins micrométrique et actif en photocatalyse au moins dans le domaine du visible (et a fortiori dans le domaine de l'UV), contenant des cristaux composés chacun de 80 à 100 % en moles de TiO₂ et de 0 à 20% en moles d'au moins un autre oxyde métallique ou semi-métallique.

Ce procédé de réalisation du support comprend les étapes additionnelles suivantes, à partir du milieu réactionnel aqueux acide obtenu ci-avant à une température de chauffage comprise entre 20 et 60°C:
a4) une étape de polymérisation du précurseur d'oxyde de titane, ou d'un mélange du précurseur d'oxyde de titane et du précurseur de l'autre oxyde, sur ou à l'intérieur du support, par :
   - pulvérisation sur le support ou
   - immersion du support dans le milieu réactionnel aqueux, pendant la durée déterminée de la synthèse,
a5) une étape de chauffage,
   le support permettant de faire cristalliser les cristaux, sans utilisation de tensioactif, dans le milieu réactionnel aqueux,
a6) une étape de rinçage à l'eau et de récupération :
   d'une part du support sur lequel la cristallisation a eu lieu, les cristaux obtenus étant composés de 80 à 100 % en moles de TiO₂ et de 0 à 20 % en moles d'au moins un autre oxyde métallique ou semi-métallique, ces cristaux étant accrochés par liaisons covalentes au support,
   et d'autre part d'une solution résiduelle.

Cette solution pourrait être réimplantée dans le milieu réactionnel pour une nouvelle synthèse en fonction de la stœchiométrie complète ou pas de la réaction avec l'alcoxyde de titane et la surface.

Pour la silice, la surface a été préparée en amont de l'étape a4), pour augmenter les points (O-) d'accrochage (greffage du Cull).

Quand il y a un support, la polymérisation sans surfactant de l'étape a4) est très rapide et est réalisée entre 30 et 90 minutes. Sans support et sans surfactant, la polymérisation est réalisée entre 2 et 3 heures.

D'autre part, les cristaux obtenus sur le support sont en général plus hétérogènes en forme et en taille que les cristaux obtenus sans support et sans surfactant.

Dans l'étape a5), la durée de chauffage déterminée est d'au moins 24 heures pour rendre actif et cristallin le matériau. A noter que la cristallisation peut se faire à température ambiante ou à une température plus grande.

Par ailleurs, dans l'étape a6), le support/matériaux peuvent être plongés dans un bain HNO₃ (étape facultative), puis rincé dans l'eau (pour éliminer les particules non accrochées).

Avantageusement, la durée de la polymérisation de l'étape a4) est inférieure à 90 minutes, et la température de chauffage est comprise entre 40°C à 95°C, pendant une durée de chauffage d'au moins 24 heures pendant l'étape de chauffage a5).

Avantageusement, le support est de taille millimétrique, centimétrique, ou métrique.

Le support peut être constitué du matériau suivant : polymères (polystyrène, polyester) ; feutre de carbone /graphite ou charbon actif ; verre ; textile (coton, basalte) ; silicates micrométriques (silice de filtration, sable) ; ciments.

Pour réaliser le support, dans l'étape a1) :
- le pH est choisi autour ou égal à 5, de façon à obtenir des cristaux sur le support ayant une forme cristalline Brookite stable,
- ou le pH est situé entre 0 et 1, de façon à obtenir des cristaux ayant une forme cristalline Rutile.

Le support de taille au moins micrométrique peut présenter, comme l'oxyde métallique ou semi-métallique associé au TiO₂, les oxydes métalliques suivants parmi la liste: SiO₂, ZrO₂, Al₂O₃, Fe₂O₃, CeO₂, MgO, ZnO, CuO, NiO.

Dans une autre réalisation, l'autre oxyde métallique associé au TiO₂ est WO₃, et dans l'étape a1) le pH est situé entre 0 et 1, de façon à obtenir des cristaux ayant une forme cristalline Anatase à au moins 90%, réactifs en photocatalyse au moins dans le domaine du visible.

Lorsque l'on réalise les cristaux sur le support par pulvérisation du milieu réactionnel aqueux, les étapes du procédé peuvent être définies plus précisément comme suit:
- le support est placé dans une étuve à 50°C dans un contenant fermé hermétiquement (pour éviter toute évaporation), dans des conditions statiques, pendant au moins 24h, puis 90°C pendant au moins 24h,
- le support est ensuite rincé abondamment à l'eau.

Il peut ensuite être séché à l'étuve à 50°C.

Avantageusement, selon la nature du support et le type d'oxydes présents, pour augmenter la réactivité et si le support le permet, mais de façon non obligatoire et non limitative, le support peut être ensuite soit :
(a) plongé dans un bain d'acide nitrique 64% 10 minutes, rincé abondamment à l'eau puis séché, ou
(b) plongé dans une solution métallique parmi Ag⁺, Cu²⁺, Ni²⁺, Zn²⁺, Au²⁺, Al³⁺, Mg⁺, pendant 10 minutes, rincé à l'eau, séché à température de la pièce puis plongé dans un bain d'acide nitrique 64% 10 minutes, rincé abondamment à l'eau puis enfin à nouveau séché à température de la pièce.

Lorsque l'on réalise les cristaux sur le support par immersion du support dans le milieu réactionnel aqueux acide, les étapes du procédé peuvent être définies plus précisément comme suit:
- le support est immergé dans le milieu réactionnel ;
- selon sa nature et sa composition, le support est soit :
   1) placé dans l'étuve en conditions statiques, ou
   2) conservé dans le milieu réactionnel avec une agitation modérée (400tr/min) ; dans les deux cas, la température du support est conservée à 50°C pour au moins 24 heures puis à 90°C pour au moins 24h ;
- le support est alors rincé abondamment à l'eau.

Il peut ensuite être séché à l'étuve à 50°C.

Ensuite, avantageusement, mais de façon non obligatoire et non limitative, pour augmenter la réactivité et si le support le permet, le support est soit :
a) plongé dans un bain d'acide nitrique 64% pendant 10 minutes, rincé abondamment à l'eau puis séché à température de la pièce,
b) plongé dans une solution métallique de pH compris entre 10,5 et 11,5 parmi : Ag⁺, Cu²⁺, Ni²⁺, Zn²⁺, Au²⁺, Al³⁺, Mg⁺, pendant 10 minutes, rincé à l'eau, séché à température de la pièce, puis plongé dans un bain d'acide nitrique 64% pendant 10 minutes, rincé abondamment à l'eau, puis enfin à nouveau séché à température de la pièce.

La présente invention concerne aussi l'utilisation du support actif en photocatalyse avec les cristaux cristallisés sur sa surface, pour la dégradation photocatalytique de composés.

Les composés peuvent être choisis parmi les colorants, les principes actifs pharmaceutiques, les herbicides, les pesticides, les fongicides, les hormones, les hydrocarbures et les composés organiques volatils comme formaldéhyde, BTEX.

Ainsi, il est illustré la dégradation du glyphosate et du toluène à partir du TiO₂ selon la présente invention.

Dégradation du glyphosate sur un tissu textile à base de basalte par exemple en 3 heures :

| Types | C0 (ppm) | C (ppm) | Efficacité (%) | Efficacité (ppm/mg ou ppm/cm²) |
|---|---|---|---|---|
| Textile sans Ti | 1 | 1 | 0 | 0 |
| Textile/Ti | 1 | 0,49 | 51% | 0,17 |
| Glyphosate | 1 | 1 | - | - |

La présence du TiO₂ sur le textile est indispensable pour éliminer les molécules de glyphosate.

Les cristaux sont bien accrochés sur le support, et il n'y a pas de TiO₂ dans la solution.

Dégradation du toluène sur textile à base de basalte :

| Types | C0 (ppm) | C (ppm) | Efficacité (%) | Efficacité (ppm/cm²) |
|---|---|---|---|---|
| Textile sans Ti | 1 | 0,49 | 51 | 0,17 |
| Textile/Ti | 1 | 0,36 | 64 | 0.21 |
| Toluène | 1 | 1 | - | - |

L'apport de TiO₂ améliore l'élimination du toluène.

Les cristaux sont bien accrochés sur le textile, et il n'y a pas de TiO₂ dans la solution.

Plusieurs applications sont possibles par exemple:
1) la qualité de l'air, notamment intérieur (dégradation des COV), avec le développement de peintures ou filtres à air,
2) la dépollution des eaux (dégradation de molécules comme BTEX, pesticides, colorants, ...),
3) antifouling ou peinture antisalissure, avec le développement de peintures, le traitement antibactérien avec le développement de filtres à air, de revêtements auto-nettoyants (verre, ciment, sable, etc).

## Revendications

1. Procédé de préparation d'un milieu réactionnel aqueux acide composé de 80 à 100 % en moles de TiO₂ et de 0 à 20 % en moles d'un autre oxyde, à partir du précurseur d'oxyde de titane qui est un alcoxyde de titane, ou du mélange de ce précurseur d'oxyde de titane avec au moins un autre précurseur d'un autre oxyde métallique ou semi-métallique, la préparation étant effectuée en milieu aqueux acide à un pH donné, sans utilisation de tensioactif, et comprenant les sous-étapes suivantes :
a1) préparation et chauffage d'une solution aqueuse acide à un pH donné, compris entre 0 et 6, et à une température comprise entre 20 et 60°C, sans tensioactif, par ajout d'acide chlorhydrique,
a2) ajout du précurseur d'oxyde de titane, ou du mélange du précurseur d'oxyde de titane et d'au moins un autre précurseur d'un autre oxyde, à la solution aqueuse acide, un précipité se formant alors,
a3) agitation du milieu réactionnel aqueux, de façon à dissoudre le précipité formé à l'étape a2).

2. Procédé de préparation d'un milieu réactionnel aqueux acide selon la revendication 1, dans lequel dans l'étape a1), le pH est choisi autour de 5, en vue d'obtenir des cristaux ayant une forme cristalline Brookite stable.

3. Procédé de préparation d'un milieu réactionnel aqueux acide selon la revendication 1, dans lequel dans l'étape a1) le pH est situé entre 0 et 1, en vue d'obtenir des cristaux ayant une forme cristalline Rutile.

4. Procédé de préparation d'un milieu réactionnel aqueux acide selon l'une des revendications 1 à 3, dans lequel l'oxyde métallique ou semi-métallique est choisi parmi la liste suivante: SiO₂, ZrO₂, Al₂O₃, Fe₂O₃, CeO₂, MgO, ZnO, CuO, NiO.

5. Procédé de préparation d'un milieu réactionnel aqueux acide, selon la revendication 1, dans lequel l'autre oxyde métallique est WO₃, et dans l'étape a1) le pH est situé entre 0 et 5, de façon à obtenir des cristaux ayant une forme cristalline Anatase à au moins 90%.

6. Procédé de réalisation d'un support de taille au moins micrométrique et actif en photocatalyse au moins dans le domaine du visible, contenant des cristaux composés chacun de 80 à 100 % en moles de TiO₂ et de 0 à 20% en moles d'au moins un autre oxyde métallique ou semi-métallique, comprenant les étapes suivantes, à partir du milieu réactionnel aqueux acide défini dans l'une des revendications 1 à 5, à une température de chauffage comprise entre 20 et 60°C:
a4) une étape d'ajout du précurseur d'oxyde de titane, ou d'un mélange du précurseur d'oxyde de titane et du précurseur de l'autre oxyde, dans le milieu réactionnel aqueux acide, et une étape de polymérisation sur ou à l'intérieur du support, par :
• pulvérisation sur le support ou
• immersion du support dans le milieu réactionnel aqueux, pendant une durée déterminée de polymérisation,
a5) une étape de chauffage,
le support permettant de faire cristalliser les cristaux, sans utilisation de tensioactif, dans le milieu réactionnel aqueux,
a6) une étape de rinçage à l'eau et une étape de récupération :
d'une part du support sur lequel la cristallisation a eu lieu, les cristaux obtenus étant composés de 80 à 100 % en moles de TiO₂ et de 0 à 20 % en moles d'au moins un autre oxyde métallique ou semi-métallique, ces cristaux étant accrochés par liaisons covalentes au support,
et d'autre part d'une solution résiduelle.

7. Procédé de réalisation d'un support selon la revendication 6, dans lequel la durée de la polymérisation de l'étape a4) est inférieure à 90 minutes.

8. Procédé de réalisation d'un support selon l'une des revendications 6 ou 7, dans lequel, pendant l'étape de chauffage a5), la température de chauffage est comprise entre 40°C à 95°C, pendant une durée de chauffage d'au moins 24 heures.

9. Procédé de réalisation d'un support selon l'une des revendications 6 à 8, dans lequel dans l'étape a1),
- le pH est choisi égal à 5, de façon à obtenir des cristaux sur le support ayant une forme cristalline Brookite stable,
- ou le pH est entre 0 et 1, de façon à obtenir des cristaux ayant une forme cristalline Rutile.

10. Procédé de réalisation d'un support selon l'une des revendications 6 à 9, dans lequel l'oxyde métallique ou semi-métallique est choisi parmi : SiO₂, ZrO₂, Al₂O₃, Fe₂O₃, CeO₂, MgO, ZnO, CuO, NiO.

11. Procédé de réalisation d'un support selon l'une des revendications 6 à 8, dans lequel l'autre oxyde métallique est WO₃, et dans l'étape a1) le pH est situé entre 0 et 1, de façon à obtenir des cristaux ayant une forme cristalline Anatase à au moins 90%.

12. Support actif en photocatalyse au moins dans le domaine du visible et de taille au moins micrométrique, réalisé par le procédé selon l'une des revendications 6 à 11, présentant à sa surface des cristaux accrochés par liaisons covalentes, ces cristaux étant composés de 80 à 100 % en moles de TiO₂ et de 0 à 20 % en moles d'un autre oxyde métallique ou semi-métallique.

13. Support actif en photocatalyse selon la revendication 12, **caractérisé en ce que** le support actif comporte de 80 à 95 % en moles de TiO₂ et de 5 à 20 % en moles d'un autre oxyde métallique ou semi-métallique.

14. Support actif en photocatalyse selon la revendication 12 ou 13, avec des cristaux ayant une forme cristalline Brookite stable.

15. Support actif en photocatalyse selon la revendication 12 ou 13, avec des cristaux ayant une forme cristalline Rutile.

16. Support actif en photocatalyse selon l'une des revendications 12 à 15, dans lequel l'oxyde métallique ou semi-métallique est choisi parmi la liste suivante : SiO₂, ZrO₂, Al₂O₃, Fe₂O₃, CeO₂, MgO, ZnO, CuO, NiO

17. Support actif en photocatalyse selon la revendication 12, avec des cristaux ayant une forme cristalline Anatase à au moins 90%, l'autre oxyde métallique étant WO₃.

18. Support actif en photocatalyse selon l'une quelconque des revendications précédentes 12 à 17, dans lequel le support est constitué du matériau suivant: polymères ; feutre de carbone /graphite ou charbon actif ; verre ; textile ; silicates micrométriques ; ciments.

19. Support actif en photocatalyse selon l'une quelconque des revendications précédentes 12 à 18, dans lequel le support est de taille millimétrique, centimétrique, métrique.
